# EUROPEAN PATENT APPLICATION

(11) **EP 4 838 453 A1**
(43) Date of publication of application: **11.11.2026**
(21) Application number: 26151784.1
(22) Date of filing: 14.01.2026
(51) Int. Cl.: G06Q 50/04, G06N 20/00, G06F 16/24, G06Q 10/087

(54) **INFORMATION PROCESSING SYSTEM AND INFORMATION PROCESSING PROGRAM**

(30) Priority: 09.05.2025 JP 2025079015; 23.10.2025 JP 2025178751
(71) Applicant: FUJIFILM Business Innovation Corp., Minato-ku Tokyo (JP)
(72) Inventor: MIKADA, Takuto, Yokohama-shi, Kanagawa (JP); KOBAYAKAWA, Shuhei, Yokohama-shi, Kanagawa (JP); MATSUMOTO, Takuto, Yokohama-shi, Kanagawa (JP); ARAKAWA, Kei, Yokohama-shi, Kanagawa (JP)
(74) Representative: Becker Kurig & Partner Patentanwälte mbB

(57) **Abstract**

An information processing system includes a processor configured to acquire first order reception information including information on specifications of a product, input input information including the first order reception information and an instruction to output first manufacturing information including information on a process of manufacturing the product based on the first order reception information to a learning model, and acquire the first manufacturing information output from the learning model.

## Description

### BACKGROUND OF THE INVENTION

### (i) Field of the Invention

The present disclosure relates to an information processing system and an information processing program.

### (ii) Description of Related Art

JP2024-177129A discloses a method performed by a computer for extracting structured information and mapping the structured information to a data model, the method including a step of acquiring text data from one or a plurality of unstructured data sources, a step of determining the rephrased text data by using a large-scale language model (LLM), a preprocessing prompt, and the text data, a step of determining extracted data by using the LLM, an extraction prompt, the data model, and the rephrased text data, and a step of mapping the extracted data to the data model.

WO2025/027758A discloses a method executed by a computer, the method including a step of inputting an instruction to an evaluation device that evaluates a semiconductor device to a language model trained in advance to receive specification data describing an operation specification of the evaluation device from the language model, in which the language model is fine-tuned in advance by at least one of domain knowledge of the semiconductor device or domain knowledge related to the evaluation device.

### SUMMARY OF THE INVENTION

There is a case where manufacturing information including information on a process of manufacturing a product is generated from order reception information for the product, and the manufacturing information is output to a device that manufactures the product. At this time, in a case where the received order reception information for the product is created in any notation, the notations of the information included in the order reception information for the product and the manufacturing information for the product may not match. In such a case, it is not possible to automatically generate the manufacturing information corresponding to the order reception information due to the discrepancy in the notations.

Therefore, an object of the present disclosure is to provide an information processing system and an information processing program that can obtain manufacturing information corresponding to order reception information even in a case where notations of information included in order reception information for a product and manufacturing information for the product do not match.

In order to achieve the above object, according to a first aspect of the present disclosure, there is provided an information processing system including a processor configured to acquire first order reception information including information on specifications of a product, input input information including the first order reception information and an instruction to output first manufacturing information including information on a process of manufacturing the product based on the first order reception information to a learning model, and acquire the first manufacturing information output from the learning model.

According to a second aspect of the present disclosure, in the information processing system according to the first aspect, the input information may include second manufacturing information different from the first manufacturing information, and the instruction may be an instruction to output the first manufacturing information based on the second manufacturing information.

According to a third aspect of the present disclosure, in the information processing system according to the second aspect, the input information may include second order reception information corresponding to the second manufacturing information, and the instruction may be an instruction to output the first manufacturing information based on the first order reception information, the second manufacturing information, and the second order reception information.

According to a fourth aspect of the present disclosure, in the information processing system according to the second or third aspect, the processor may be configured to extract a manufacturing item value that is a value of a manufacturing item included in manufacturing information, based on the first order reception information, and include search manufacturing information that is manufacturing information searched from among a plurality of pieces of manufacturing information based on the manufacturing item value, as the second manufacturing information in the input information.

According to a fifth aspect of the present disclosure, in the information processing system according to the fourth aspect, the processor may be configured to display a plurality of pieces of the search manufacturing information on a display, receive a selection of a user for at least one of the plurality of pieces of displayed search manufacturing information, and include the search manufacturing information for which the selection is received as the second manufacturing information in the input information.

According to a sixth aspect of the present disclosure, in the information processing system according to the fifth aspect, the processor may be configured to calculate, for each of the plurality of pieces of search manufacturing information, a similarity between the manufacturing item value included in the manufacturing information and a manufacturing item value included in the search manufacturing information, and determine an order in which the plurality of pieces of search manufacturing information are displayed, based on the calculated similarity.

According to a seventh aspect of the present disclosure, in the information processing system according to the sixth aspect, the processor may be configured to display the similarity calculated for each of the plurality of pieces of search manufacturing information in association with each of the plurality of pieces of search manufacturing information.

According to an eighth aspect of the present disclosure, in the information processing system according to any one of the fourth to seventh aspects, the processor may be configured to extract the manufacturing item value based on the first order reception information by inputting the first order reception information to the learning model and acquiring the manufacturing item value output from the learning model.

According to a ninth aspect of the present disclosure, in the information processing system according to the eighth aspect, the processor may be configured to further acquire a manufacturing item value of a predetermined manufacturing item included in the manufacturing information from the first order reception information, and search for the manufacturing information from among the plurality of pieces of manufacturing information by using the acquired manufacturing item value output from the learning model and the acquired manufacturing item value of the predetermined manufacturing item.

According to a tenth aspect of the present disclosure, in the information processing system according to any one of the fourth to ninth aspects, the processor may be configured to further acquire correspondence information indicating correspondence between an order reception item included in the first order reception information and a manufacturing item included in the first manufacturing information, and extract the manufacturing item based on the first order reception information and the correspondence information.

According to an eleventh aspect of the present disclosure, in the information processing system according to the tenth aspect, the processor may be configured to further input the first order reception information and the first manufacturing information to the learning model, and acquire the correspondence information output from the learning model.

According to a twelfth aspect of the present disclosure, in the information processing system according to the eleventh aspect, the processor may be configured to further display a plurality of order reception items included in the first order reception information and a plurality of manufacturing items included in the first manufacturing information on a display based on the acquired correspondence information, and display a first order reception item included in the first order reception information and a first manufacturing item corresponding to the first order reception item in association with each other on the display.

According to a thirteenth aspect of the present disclosure, in the information processing system according to the twelfth aspect, the processor may be configured to, in a case where the learning model determines that one order reception item included in the first order reception information corresponds to the plurality of manufacturing items included in the first manufacturing information, display the one order reception item and the plurality of manufacturing items in association with each other on the display.

According to a fourteenth aspect of the present disclosure, in the information processing system according to any one of the fourth to thirteenth aspects, the processor may be configured to further include, in a case where the first order reception information includes identification information that is information for identifying specific manufacturing information, the specific manufacturing information in the input information by searching for the specific manufacturing information based on the identification information, and not extract the manufacturing item and not search for the manufacturing information based on the manufacturing item.

According to a sixteenth aspect of the present disclosure, there is provided an information processing program causing a computer to execute acquiring first order reception information including information on specifications of a product, inputting input information including the first order reception information and an instruction to output first manufacturing information including information on a process of manufacturing the product based on the first order reception information to a learning model, and acquiring the first manufacturing information output from the learning model.

According to the first aspect, even in a case where the notations of the information included in the order reception information for the product and the manufacturing information for the product do not match, the manufacturing information corresponding to the order reception information can be obtained.

According to the second aspect, the manufacturing information corresponding to the order reception information can be obtained in consideration of manufacturing information different from the manufacturing information corresponding to the order reception information.

According to the third aspect, the manufacturing information corresponding to the order reception information can be obtained in consideration of manufacturing information different from the manufacturing information corresponding to the order reception information and the order reception information corresponding to the manufacturing information.

According to the fourth aspect, the manufacturing information corresponding to the order reception information can be obtained in consideration of the manufacturing information searched for by using the manufacturing item extracted from the order reception information.

According to the fifth aspect, the manufacturing information corresponding to the order reception information can be obtained in consideration of the manufacturing information selected by the user.

According to the sixth aspect, the user can be caused to select the manufacturing information from among the plurality of pieces of manufacturing information displayed in the order based on the similarity with the extracted manufacturing item value.

According to the seventh aspect, in a case where the user selects from the plurality of pieces of displayed manufacturing information, the user can refer to the similarity with the extracted manufacturing item value.

According to the eighth aspect, the manufacturing information can be searched for by using the manufacturing item value acquired by using the learning model.

According to the ninth aspect, the manufacturing information can be searched for by using the manufacturing item value acquired by using the learning model and the predetermined manufacturing item value.

According to the tenth aspect, the manufacturing information corresponding to the order reception information can be obtained in consideration of the manufacturing information searched for by using the manufacturing item extracted from the order reception information based on the correspondence between the order reception item included in the order reception information and the manufacturing item included in the manufacturing information.

According to the eleventh aspect, the correspondence information indicating the correspondence between the order reception item included in the order reception information and the manufacturing item included in the manufacturing information can be obtained by using the learning model.

According to the twelfth aspect, the user can be caused to confirm the correspondence information indicating the correspondence between the order reception item included in the order reception information and the manufacturing item included in the manufacturing information, which is obtained by using the learning model.

According to the thirteenth aspect, even in a case where one order reception item corresponds to the plurality of manufacturing items, the user can be caused to confirm the correspondence information indicating the correspondence between the order reception item included in the order reception information and the manufacturing item included in the manufacturing information, which is obtained by using the learning model.

According to the fourteenth aspect, in a case where the identification information included in the order reception information is information for identifying the specific manufacturing information, the manufacturing information corresponding to the order reception information can be obtained in consideration of the specific manufacturing information without performing the search for the manufacturing information.

According to the sixteenth aspect, even in a case where the notations of the information included in the order reception information for the product and the manufacturing information for the product do not match, the manufacturing information corresponding to the order reception information can be obtained.

### BRIEF DESCRIPTION OF THE DRAWINGS

Exemplary embodiment(s) of the present invention will be described in detail based on the following figures, wherein:
FIG. 1 is a diagram showing a schematic configuration of an information processing system according to the present exemplary embodiment;
FIG. 2 is a block diagram showing a major configuration of an electrical system of a printing apparatus in the information processing system according to the present exemplary embodiment;
FIG. 3 is a block diagram showing a major configuration of an electrical system of a server and a management apparatus in the information processing system according to the present exemplary embodiment;
FIG. 4 is a functional block diagram showing a functional configuration of the server in the information processing system according to the present exemplary embodiment;
FIG. 5 is a flowchart showing an example of a flow of information processing performed by the server of the information processing system according to the present exemplary embodiment;
FIG. 6 is a diagram showing an example of an input screen of correspondence information;
FIG. 7 is a diagram showing an example of the input screen of the correspondence information;
FIG. 8 is a diagram showing an example of an editing screen of a search item;
FIG. 9 is a diagram showing an example of a display screen of a search result; and
FIG. 10 is a diagram showing another example of the display screen of the search result.

### DETAILED DESCRIPTION OF THE INVENTION

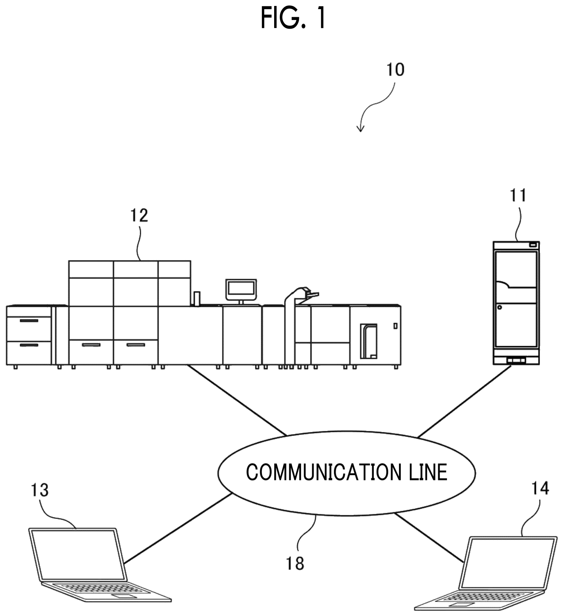

Hereinafter, an example of the present exemplary embodiment will be described in detail with reference to the drawings. In the present exemplary embodiment, an information processing system in which a management apparatus, a printing apparatus, a user terminal, a server, and the like are connected to each other via a communication line such as various networks is described as an example. FIG. 1 is a diagram showing a schematic configuration of an information processing system 10 according to the present exemplary embodiment.

As shown in FIG. 1, the information processing system 10 according to the present exemplary embodiment includes a server 11, a printing apparatus 12, a user terminal 13, a management apparatus 14, and the like. The server 11, the printing apparatus 12, the user terminal 13, and the management apparatus 14 are connected to each other via a communication line 18 such as a local area network (LAN), a wide area network (WAN), the Internet, and an intranet. Then, each of the server 11, the printing apparatus 12, the user terminal 13, and the management apparatus 14 can transmit and receive various types of data to and from each other via the communication line 18. In the present exemplary embodiment, a print instruction is sent from the management apparatus 14 to the printing apparatus 12, and an image according to the print instruction is formed in the printing apparatus 12.

In FIG. 1, although one server 11, one printing apparatus 12, one user terminal 13, and one management apparatus 14 are shown, a plurality of servers 11, a plurality of printing apparatuses 12, a plurality of user terminals 13, a plurality of management apparatuses 14 may be used, or any one of the server 11, the printing apparatus 12, the user terminal 13, the management apparatus 14 may be used in a plurality.

Examples of the printing apparatus 12 according to the present exemplary embodiment include an offset printer and a digital printer. Hereinafter, a case where the printing apparatus 12 has a plurality of functions such as a printing function of performing printing processing and a post-processing function of performing post-processing on printed paper will be described as an example. The plurality of functions may include a scanning function of scanning a manuscript to obtain image information representing the manuscript, a copying function of copying an image recorded in the manuscript on paper, a facsimile function of transmitting and receiving various types of data via a telephone line (not shown), a transfer function of transferring manuscript information such as the image information scanned by the scanning function, and an accumulating function of accumulating the manuscript information such as the scanned image information.

In the following description, the facsimile function may be referred to as a fax, the scanning function may be referred to as a scan, the printing function may be referred to as a print, and the copying function may be referred to as a copy.

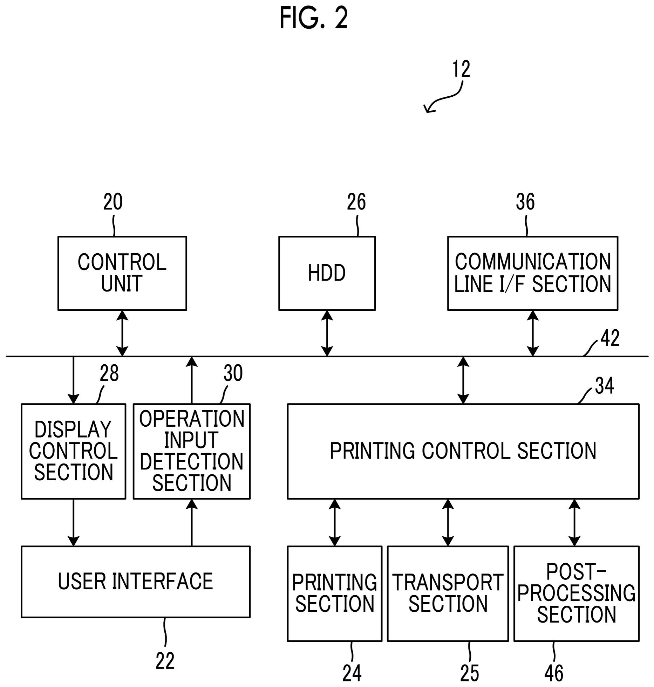

FIG. 2 is a block diagram showing a major configuration of an electrical system of the printing apparatus 12 in the information processing system 10 according to the present exemplary embodiment.

As shown in FIG. 2, the printing apparatus 12 according to the present exemplary embodiment includes a control unit 20. The control unit 20 may include a central processing unit (CPU), a read only memory (ROM), and a random access memory (RAM).

In addition, the printing apparatus 12 according to the present exemplary embodiment includes a hard disk drive (HDD) 26 that stores various types of data, application programs, and the like. In addition, the printing apparatus 12 includes a display control section 28 that is connected to a user interface 22 and controls display of various operation screens and the like on a display of the user interface 22. Further, the printing apparatus 12 includes an operation input detection section 30 that is connected to the user interface 22 and detects an operation instruction input via the user interface 22. In the printing apparatus 12, the HDD 26, the display control section 28, and the operation input detection section 30 are electrically connected to a system bus 42. In the printing apparatus 12 according to the present exemplary embodiment, the HDD 26 is applied as a storage section, but the present disclosure is not limited thereto, and a non-volatile storage section such as a flash memory may be applied. In addition, in the present exemplary embodiment, a touch panel that can perform display and operation input is applied to the user interface 22, but the present disclosure is not limited thereto, and a user interface in which a display and an operation section are separate from each other may be applied.

In addition, the printing apparatus 12 according to the present exemplary embodiment includes a printing control section 34 that controls printing processing by a printing section 24, transport of paper to the printing section 24 by a transport section 25, and post-processing by a post-processing section 46. The printing apparatus 12 may include a scanning control section that controls an optical image scanning operation by a manuscript scanning section and a manuscript feeding operation by a manuscript transport section. In addition, the printing apparatus 12 includes a communication line interface (I/F) section 36 that is connected to the communication line 18 and transmits and receives communication data to and from other external apparatuses such as the management apparatus 14 connected to the communication line 18. Further, the printing apparatus 12 may include a facsimile interface (I/F) section that is connected to a telephone line (not shown) and transmits and receives facsimile data to and from a facsimile apparatus connected to the telephone line. In addition, the printing apparatus 12 may include a transmission and reception control section that controls transmission and reception of the facsimile data via the facsimile I/F section. In the printing apparatus 12, the printing control section 34 and the communication line I/F section 36 are electrically connected to the system bus 42.

With the above configuration, the printing apparatus 12 according to the present exemplary embodiment executes control of display of an operation screen and information, such as various messages, on the display of the user interface 22 via the display control section 28, by the control unit 20. In addition, the printing apparatus 12 executes each of control of operation of the printing section 24, the transport section 25, and the post-processing section 46 via the printing control section 34, and control of the transmission and reception of the communication data via the communication line I/F section 36, by the control unit 20. Further, the printing apparatus 12 ascertains an operation content in the user interface 22 based on operation information, which is detected by the operation input detection section 30, and executes various types of control based on the operation content, by the control unit 20.

As an example of applications stored in the HDD 26, in the present exemplary embodiment, applications that execute a function such as a print are included.

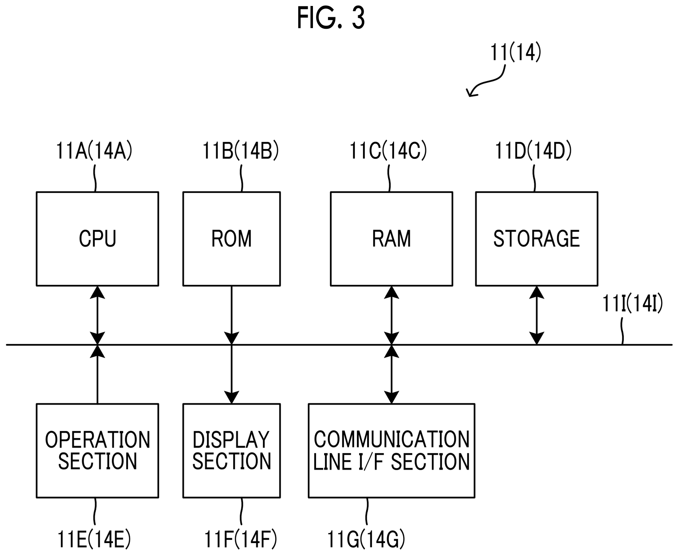

Subsequently, a major configuration of an electrical system of the server 11 and the management apparatus 14 according to the present exemplary embodiment will be described. FIG. 3 is a block diagram showing a major configuration of an electrical system of the server 11 and the management apparatus 14 in the information processing system 10 according to the present exemplary embodiment. Since the server 11 and the management apparatus 14 have a general computer configuration, the server 11 will be described below as a representative.

As shown in FIG. 3, the server 11 according to the present exemplary embodiment includes a CPU 11A as an example of a processor, a ROM 11B, a RAM 11C, a storage 11D, an operation section 11E, a display section 11F, and a communication line interface (I/F) section 11G. The CPU 11A controls the overall operation of the server 11. The ROM 11B stores various control programs, various parameters, and the like in advance. The RAM 11C is used as a work area or the like in a case where various programs are executed by the CPU 11A. The storage 11D stores various types of data, application programs, and the like. The operation section 11E is used to input various types of information. The display section 11F is used to display the various types of information. The communication line I/F section 11G is connected to the communication line 18 and transmits and receives various types of data to and from other apparatuses connected to the communication line 18. In addition, the communication line I/F section 11G may be configured to be capable of directly communicating with each apparatus using various well-known wireless communications. Each section of the server 11 described above is electrically connected to each other by a system bus 11I. In the server 11 according to the present exemplary embodiment, the storage 11D is applied as a storage section, but, as an example of a storage, a non-volatile storage section, such as a hard disk drive (HDD) or a flash memory, is applied.

With the above configuration, the server 11 according to the present exemplary embodiment executes each of accesses to the ROM 11B, the RAM 11C, and the storage 11D, acquisition of various types of data via the operation section 11E, and display of various types of information on the display section 11F, by the CPU 11A. In addition, the server 11 executes control of transmitting and receiving communication data via the communication line I/F section 11G, by the CPU 11A.

In the information processing system 10 having the above-described configuration, the management apparatus 14 manages a series of manufacturing processes. The series of manufacturing processes include, for example, a production process, a prepress process, a plate-making process, a printing process, a processing process, and a distribution process.

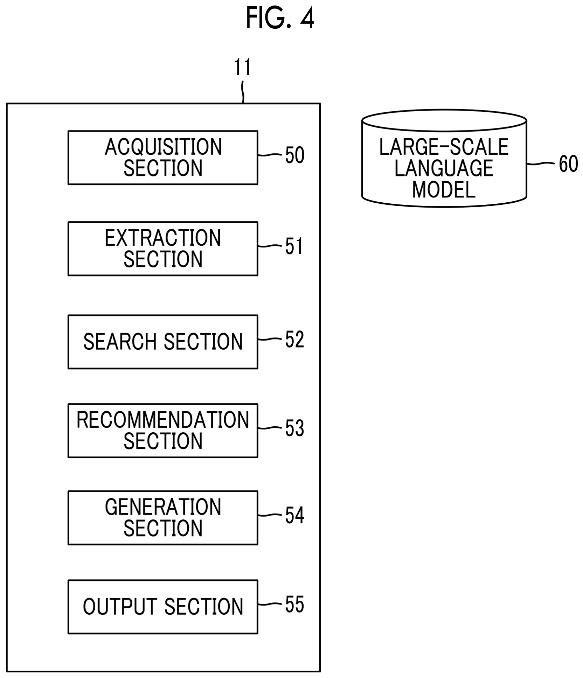

Next, a functional configuration of the server 11 will be described. FIG. 4 is a block diagram showing an example of the functional configuration of the server 11.

Functionally, the server 11 is configured to include an acquisition section 50, an extraction section 51, a search section 52, a recommendation section 53, a generation section 54, and an output section 55 as shown in FIG. 4.

The acquisition section 50 acquires order reception information including information on specifications of a printed matter that is created in the user terminal 13. The acquired order reception information is created in any notation in the user terminal 13. The order reception information is, for example, any comma separated values (CSV) data structure as follows.

```
         <input_data>
         Order reception number,Size,Number of copies,Part, ...
         0001,A4,1000,Cover, ...
         0001,A4,1000,Main text, ...
         </input_data>
```

The order reception information is not limited to the CSV data structure. For example, the order reception information may have a text data structure.

In addition, the order reception information has an optional comment field (for example, a note field). The acquired order reception information is an example of first order reception information. The printed matter is an example of a product.

The extraction section 51 extracts a manufacturing item, which is an item included in manufacturing information on a manufacturing process of the printed matter, based on the acquired order reception information. The manufacturing information includes predetermined manufacturing items and is, for example, a desired extensible markup language (XML) data structure as follows.

```
         <xml_schema>
         ...
         <xs:element name="order_template _attributes">
         ...
                  <xs:element name="order_id" />
                  <xs:element name="order_previous_id" />
                  ...
                          <xs:element name="product_template_attributes">
                          ...
         <xs:element name="product_id" />
         <xs:element name="product_management_user_id" />
         ...
                                            <xs:element name="part_template_attributes">
                                            ...
                                            <xs:element name="part_id" type=xs:string />
                                            <xs:element name="part_management_user_id" />
                                            ...
                                            </xml_schema>
```

The manufacturing information is not limited to the XML structure. For example, the manufacturing information may have the CSV data structure.

Specifically, the extraction section 51 extracts a manufacturing item predetermined as a search item among the manufacturing items included in the manufacturing information, based on the acquired order reception information. At this time, the extraction section 51 acquires correspondence information indicating correspondence between the order reception item included in the order reception information and the manufacturing item included in the manufacturing information, and extracts the manufacturing item predetermined as the search item, based on the acquired order reception information and the correspondence information.

For example, the correspondence information is information indicating the correspondence between the order reception item included in the order reception information and the manufacturing item included in the manufacturing information, as follows.

```
         <mapping_data>
         {
         "Order reception number":"order_id",
         "Size":"product_final_size_master_name",
         }
         </mapping_data>
```

The extraction section 51 extracts the following search items from the acquired order reception information, for example.

```
         "order_id":0001
         "product_final_size_master_name":A4
```

The search item is an item related to product specifications and is an item excluding a past order reception number.

In addition, the extraction section 51 inputs the acquired order reception information to a large-scale language model 60 and acquires the manufacturing item output from the large-scale language model 60 to extract the manufacturing item predetermined as the search item, based on the acquired order reception information.

Specifically, the extraction section 51 inputs the acquired order reception information, the correspondence information, and a prompt sentence for providing an instruction to extract the manufacturing item predetermined as the search item from the order reception information to the large-scale language model 60, and acquires the manufacturing item output from the large-scale language model 60.

The prompt sentence includes, for example, an instruction to extract the manufacturing item predetermined as the search item from the order reception information, from the notes included in the order reception information by using the correspondence information. Accordingly, the manufacturing item predetermined as the search item can be extracted from the note field which is the optional comment field of the order reception information.

The extraction section 51 extracts the following search items from, for example, the output of the large-scale language model 60.

### "Number of colors":CMYK

Correspondence information created by hand in advance may be used, or the correspondence information may be created by using the large-scale language model 60. In a case where the correspondence information is created by using the large-scale language model 60, the order reception information, the manufacturing information corresponding to the order reception information, and the prompt sentence for providing an instruction to create the correspondence information may be input to the large-scale language model 60, and the correspondence information output from the large-scale language model 60 may be acquired.

The search item extracted by the extraction section 51 may be output in an XML format or may be output in a format of the correspondence information.

The large-scale language model 60 is stored in, for example, a server different from the server 11. The large-scale language model 60 is so-called generative artificial intelligence (AI). Examples of the large-scale language model include generative AI such as ChatGPT (registered trademark) (Internet search <URL: https://openai.com/blog/chatgpt>) or Gemini (registered trademark) (Internet search <URL: https://gemini.google.com/?hl=ja>). The large-scale language model 60 is obtained by causing a neural network to perform deep learning. A prompt sentence including an instruction is input to the large-scale language model 60, and inference data, such as text data indicating text and image data indicating an image, is also input to the large-scale language model 60. The large-scale language model 60 infers the input inference data according to the instruction indicated by the prompt sentence and outputs the inference result in a data format such as audio data and text data. Here, the inference is, for example, analysis, classification, prediction, and/or summarization. The language model in the present invention is not limited to the large-scale language model, and includes a large multimodal model (LMM), a small-scale language model (SLM) such as Phi, and the like. The large-scale language model 60 is an example of a learning model.

The search section 52 searches for manufacturing information similar to the acquired order reception information from among the plurality of pieces of manufacturing information by using an item value corresponding to the search item extracted from the order reception information and an item value corresponding to the search item acquired from the output of the large-scale language model 60.

For example, the management apparatus 14 has a database in which a pair of past manufacturing information and order reception information is stored. The search section 52 searches for a pair of the manufacturing information similar to the acquired order reception information and the order reception information corresponding to the manufacturing information by using a search query including the item value of the search item extracted from the order reception information and the item value of the search item acquired from the output of the large-scale language model 60, for the database of the management apparatus 14. The item value used for the search at this time may be a manufacturing item value that is an item value included in the manufacturing information, or may be an order reception item value that is an item value included in the order reception information.

For example, manufacturing items representing each of a product name, a customer name, a bookbinding specification, and a parts list, which are examples of manufacturing items, are set as search items, a Levenshtein edit distance of an item value corresponding to each search item is calculated, a weighted average is taken to score the Levenshtein edit distance, and a pair of manufacturing information having the highest score and order reception information corresponding to the manufacturing information is searched for. The weights in the weighted average are set to "1:1:3:5" for the manufacturing items that represent, for example, a product name, a customer name, a bookbinding specification, and a parts list. The manufacturing information searched here is an example of search manufacturing information.

In addition, the search section 52 may display the plurality of pieces of searched manufacturing information on a display section (not shown) of the user terminal 13 and receive the selection of the user for at least one of the plurality of pieces of displayed manufacturing information from the user terminal 13.

At this time, the search section 52 may calculate a similarity between the manufacturing item included in the manufacturing information and the search item extracted based on the order reception information for each of the plurality of pieces of searched manufacturing information, and may determine an order in which the plurality of pieces of manufacturing information are displayed based on the calculated similarity. The display order includes an arrangement order in a case where the plurality of pieces of manufacturing information are displayed at the same time, and a display order in a case where the plurality of pieces of manufacturing information are displayed one by one.

In addition, in a case where the acquired order reception information includes identification information that is information for identifying the specific manufacturing information, the search section 52 searches for the specific manufacturing information and the order reception information corresponding to the specific manufacturing information from the database of the management apparatus 14 based on the identification information. In this case, the search section 52 does not perform the search for the manufacturing information similar to the acquired order reception information. The identification information that is information for identifying the specific manufacturing information includes, for example, an order reception number for identifying the manufacturing information of the previous order reception or an order reception number for identifying the manufacturing information to be referred to, which is order-received in the past.

The recommendation section 53 compares the searched manufacturing information with the acquired order reception information, specifies a part that is not included in the order reception information among the parts related to the printed matter manufactured by the manufacturing information as an insufficient part, displays the insufficient part on the user terminal 13, and recommends the insufficient part. The recommendation section 53 receives information on the insufficient part for the printed matter corresponding to the acquired order reception information from the user terminal 13.

For example, the recommendation section 53 compares information on a part (a constituent element such as a cover or a main text) in the order reception information corresponding to the searched manufacturing information with the acquired order reception information, specifies a part that is not included in the acquired order reception information among parts included in the order reception information corresponding to the searched manufacturing information, as an insufficient part, displays the insufficient part on the user terminal 13, and recommends the insufficient part. The recommendation section 53 receives the order reception information corrected to add the information on the insufficient part from the user terminal 13.

The specification of the insufficient part in the recommendation section 53 may be performed by using the large-scale language model 60.

The generation section 54 inputs a prompt sentence including an instruction to output the acquired order reception information, a pair of the searched manufacturing information and order reception information, and manufacturing information including information on a process of manufacturing a printed matter based on the order reception information and the manufacturing information to the large-scale language model 60, and acquires the manufacturing information output from the large-scale language model 60. It should be noted that the prompt sentence is an example of input information.

The prompt sentence includes an instruction to output the manufacturing information from the acquired order reception information, for example, with the searched manufacturing information as an example or with the pair of the searched manufacturing information and the order reception information as an example.

In a case where the search section 52 receives the selection of the user for at least one of the plurality of pieces of displayed manufacturing information, the manufacturing information for which the selection is received is input to the large-scale language model 60 as the searched manufacturing information.

The output section 55 transmits the acquired manufacturing information to the management apparatus 14. Accordingly, the management apparatus 14 instructs the printing apparatus 12 to manufacture the printed matter based on the manufacturing information received from the server 11.

Next, specific processing performed in the information processing system 10 according to the present exemplary embodiment configured as described above will be described.

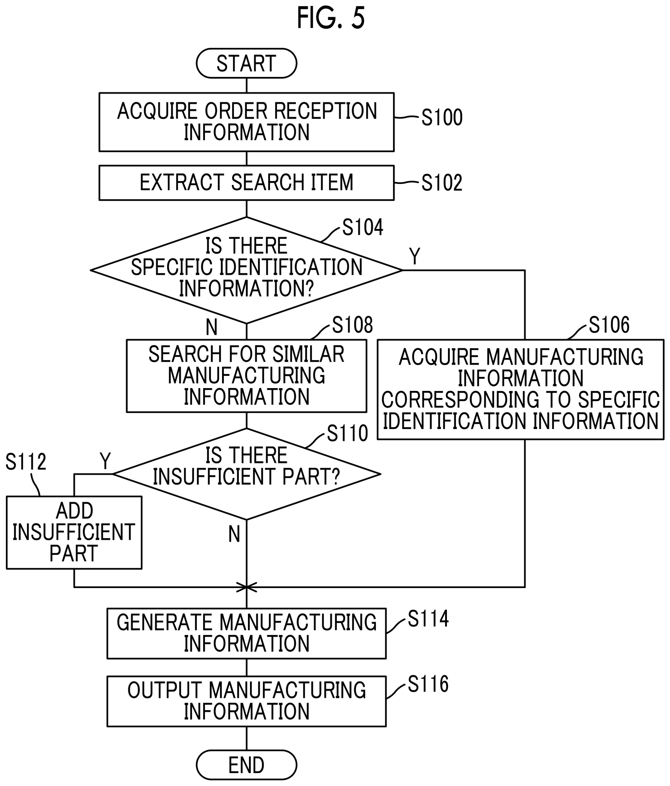

First, in the server 11, information processing shown in FIG. 5 is performed by causing the CPU 11A to read an information processing program from the ROM 11B or the storage 11D, load the information processing program into the RAM 11C, and execute the information processing program. At this time, it is assumed that the order reception information is input from the user terminal 13.

In step S100, the CPU 11A acquires the order reception information including the information on the specification of the printed matter that is created in the user terminal 13, as the acquisition section 50. The order reception information acquired here is an example of the first order reception information.

In step S102, the CPU 11A extracts, as the search item, the manufacturing item that is an item included in the manufacturing information on the manufacturing process of the printed matter based on the acquired order reception information and the correspondence information, as the extraction section 51.

Specifically, the CPU 11A acquires the correspondence information indicating correspondence between the order reception item included in the order reception information and the manufacturing item included in the manufacturing information, and extracts the manufacturing item predetermined as the search item, based on the acquired order reception information and the correspondence information, as the extraction section 51.

Then, the CPU 11A inputs the acquired order reception information to the large-scale language model 60 and acquires the manufacturing item output from the large-scale language model 60 to extract a manufacturing item other than the manufacturing item predetermined as the search item, based on the acquired order reception information, as the extraction section 51. In this processing, the correspondence information may be input to the large-scale language model 60 together with the acquired order reception information.

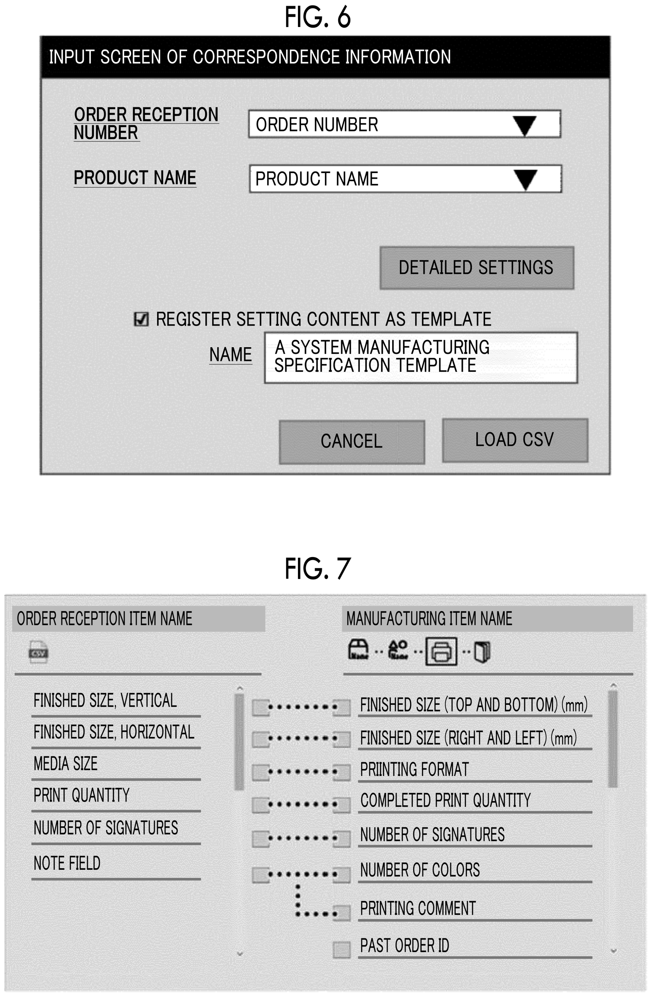

The correspondence information is prepared in advance. For example, an input screen of the correspondence information shown in FIG. 6 is displayed on the user terminal 13, and the correspondence between the order reception item included in the order reception information and the manufacturing item included in the manufacturing information is received from the user. FIG. 6 shows an example in which an order reception item "order number" corresponding to a manufacturing item "order reception number" and an order reception item "product name" corresponding to a manufacturing item "product name" that is necessary as a search item are received. In addition, FIG. 6 shows an example in which the received correspondence relationship is registered as a template. Furthermore, FIG. 6 shows an example in which a correspondence relationship other than the manufacturing item that is necessary as the search item is set as the "detailed settings". In the "detailed settings", for example, the input screen of the correspondence information shown in FIG. 7 is displayed on the user terminal 13, the correspondence between the order reception item included in the order reception information and the manufacturing item included in the manufacturing information, which is obtained by using the large-scale language model 60, is displayed, and an instruction to edit the correspondence between the order reception item and the manufacturing item is received from the user. FIG. 7 shows an example in which a correspondence between the order reception item "note field" and the manufacturing item "number of colors" and "printing comment" obtained by using the large-scale language model 60 is displayed.

In step S104, the CPU 11A determines whether or not the acquired order reception information includes the identification information that is information for identifying the specific manufacturing information, as the search section 52. In a case where the acquired order reception information includes the identification information that is information for identifying the specific manufacturing information, the processing proceeds to step S106. On the other hand, in a case where the acquired order reception information does not include the identification information that is information for identifying the specific manufacturing information, the processing proceeds to step S108.

In step S106, the CPU 11A acquires the specific manufacturing information and the order reception information corresponding to the specific manufacturing information from the database of the management apparatus 14, based on the identification information that is information for identifying the specific manufacturing information, as the search section 52.

In step S108, the CPU 11A searches for the manufacturing information similar to the acquired order reception information from among the plurality of pieces of manufacturing information by using the search item extracted from the order reception information and the search item acquired from the output of the large-scale language model 60, as the search section 52.

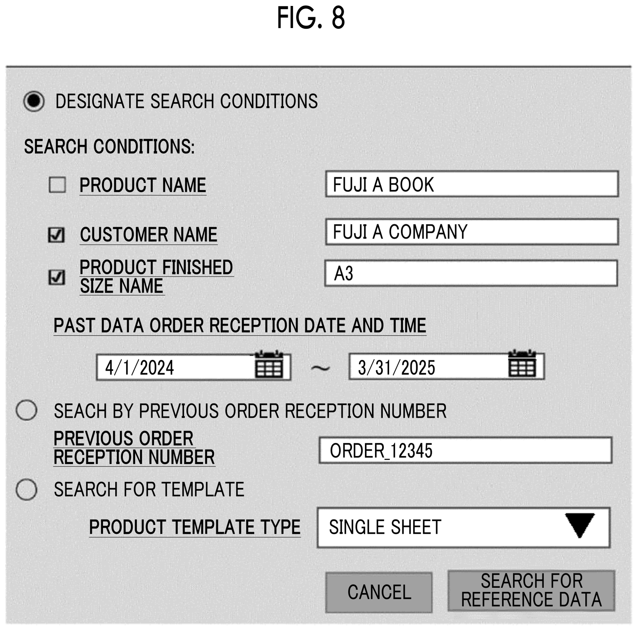

At this time, as shown in FIG. 8, an editing screen of the search items including the search item extracted from the order reception information and the search item acquired from the output of the large-scale language model 60 may be displayed on the user terminal 13, and an editing instruction for the search items may be received from the user. FIG. 8 shows an example in which each item value of the search items "customer name" and "product finished size name" extracted from the order reception information is displayed, and editing of each item value of the search items "customer name" and "product finished size name" is received. In addition, FIG. 8 shows an example in which the designation of the period of the order reception date and time of the manufacturing information to be searched for is received. In addition, FIG. 8 shows an example in which the previous order reception number or template can be received instead of the search item.

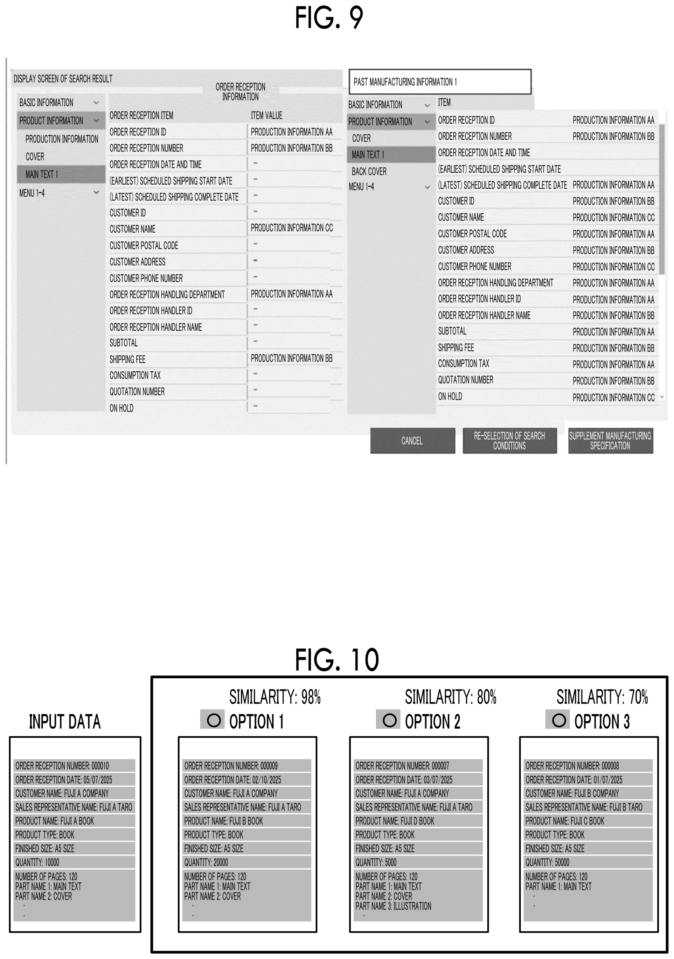

In addition, as shown in FIG. 9, the search manufacturing information, which is the searched manufacturing information, may be displayed on the user terminal 13. FIG. 9 shows an example in which each order reception item in the order reception information acquired this time and each search item in the searched search manufacturing information are displayed in a comparable manner. In addition, FIG. 9 shows an example in which a manufacturing item to be displayed is selected from among the plurality of pieces of searched search manufacturing information in the selection box. In addition, FIG. 9 shows an example in which a request for re-selection of the search conditions or supplementation of the manufacturing specification can be received.

In addition, as shown in FIG. 10, the similarity calculated for each of the plurality of pieces of search manufacturing information may be displayed in association with each of the plurality of pieces of search manufacturing information. FIG. 10 shows an example in which each order reception item in the order reception information acquired this time and each search item in the searched search manufacturing information are displayed in a comparable manner and the similarity calculated for each search manufacturing information is displayed in association with the search manufacturing information.

In addition, the specific manufacturing information acquired in above-described step S106 may also be displayed on the user terminal 13 in the same manner as in FIG. 9.

In step S110, the CPU 11A compares the searched search manufacturing information with the acquired order reception information, and determines whether or not there is an insufficient part that is not included in the order reception information among the parts related to the printed matter manufactured by the manufacturing information, as the recommendation section 53. In a case where it is determined that there is an insufficient part that is not included in the order reception information, the processing proceeds to step S112. On the other hand, in a case where it is determined that there is no insufficient part that is not included in the order reception information, the processing proceeds to step S114.

In step S112, the CPU 11A displays the specified insufficient part on the user terminal 13, recommends the insufficient part, and receives the corrected order reception information in which the information on the insufficient part is added from the user terminal 13, as the recommendation section 53.

In step S114, the CPU 11A inputs a prompt sentence including an instruction to output the acquired order reception information, a pair of the searched search manufacturing information and the order reception information, and the manufacturing information including information on a process of manufacturing a printed matter based on the order reception information and the manufacturing information to the large-scale language model 60, and acquires the manufacturing information output from the large-scale language model 60, as the generation section 54. At this time, the manufacturing information input to the large-scale language model may not be paired with the order reception information, and the order reception information corresponding to the searched manufacturing information may not be input to the large-scale language model 60. In addition, the search manufacturing information input to the large-scale language model 60 at this time is an example of second manufacturing information, and may be the manufacturing information acquired in step S106 or the manufacturing information searched in step S108. Among the plurality of pieces of search manufacturing information searched in step S108, the manufacturing information selected by the user may be used, or the manufacturing information directly input by the user may be used as the second manufacturing information.

In step S116, the CPU 11A transmits the acquired manufacturing information to the management apparatus 14 as the output section 55, and ends the information processing.

By performing the processing in this way, even in a case where the notations of the information included in the order reception information for the product and the manufacturing information for the product do not match, it is possible to obtain the manufacturing information corresponding to the order reception information. In addition, the search item can be extracted from ambiguous notations in the optional comment field of the order reception information by extracting the search item from the order reception information by using the large-scale language model.

In addition, the manufacturing information corresponding to order reception information can be obtained by using the large-scale language model. At this time, by inputting a pair of the similar manufacturing information and the order reception information to the large-scale language model, appropriate manufacturing information corresponding to the order reception information can be obtained.

### <Modification Example>

The present invention is not limited to the above-described exemplary embodiments, and various modifications and applications are possible without departing from the gist of the present invention.

In the exemplary embodiments, the processes are performed by any computer. The computer may perform the processes by using a processor serving as hardware, a program serving as software, or combination of these. In this case, the processor is configured to perform the processes in the exemplary embodiments in cooperation with the program and may function as a unit or a means in the exemplary embodiments. The order in which the processor performs the processes is not limited to the described order and may be changed appropriately. The computer may be a general-purpose computer, an application specific computer, a workstation, or another system capable of performing the processes.

The processor may be composed of one or more pieces of hardware, and the type of the hardware is not limited. For example, the processor may be composed of hardware such as a central processing unit (CPU), a micro processing unit (MPU), a programmable logic device such as a field programmable gate array (FPGA), a dedicated circuit for performing specific processing such as an application specific integrated circuit (ASIC), a graphics processing unit (GPU), or a neural processing unit (NPU). Regarding the type of the hardware, different types of hardware may be combined. If multiple pieces of hardware are configured to perform one or more processes of the processor, the multiple pieces of hardware may be present in apparatuses physically away from each other or may be present in one apparatus. In each of exemplary embodiments, the order in which the processor performs the processes is not limited to the order described above and may be changed appropriately. The hardware is composed of electric circuitry in which circuit elements such as semiconductor devices are combined, or the like.

Further, the program may be software such as firmware or microcode. The program may be, for example, a program module group, and the functions thereof may be implemented by processors configured to implement the respective functions. The program may be program code or multiple code segments stored in one or more non-transitory computer readable media (for example, a storage medium or another storage). The program may be stored in such a divided manner in multiple non-transitory computer readable media present in apparatuses physically away from each other. The program code or the code segments may represent a procedure, a function, a sub program, a routine, a subroutine, a module, a software package, a class or any combination of instructions, data structures, or program statements. The program code or the code segment may be connected to another code segment or a hardware circuit by transmitting and/or receiving information, data, an argument, a parameter, or memory content.

In addition, the "system" in the present exemplary embodiment is described as an example of a system configured by a plurality of apparatuses, but may be configured by a single apparatus having some functions of the plurality of apparatuses.

The processing performed by the printing apparatus 12 according to the above exemplary embodiment may be processing performed by software, processing performed by hardware, or a combination of both. In addition, the processing performed by the printing apparatus 12 may be stored in a storage medium as a program and distributed. In addition, the technique of the present disclosure may be applied to a program product.

In addition, the present disclosure is not limited to the above description, and various modifications other than the above description may be made without departing from the gist thereof.

Regarding the above exemplary embodiments, the following supplementary notes will be further disclosed.
(((1))) An information processing system comprising:
   a processor configured to:
   acquire first order reception information including information on specifications of a product;
   input input information including the first order reception information and an instruction to output first manufacturing information including information on a process of manufacturing the product based on the first order reception information to a learning model; and
   acquire the first manufacturing information output from the learning model.
(((2))) The information processing system according to (((1))),
   wherein the input information includes second manufacturing information different from the first manufacturing information, and
   the instruction is an instruction to output the first manufacturing information based on the second manufacturing information.
(((3))) The information processing system according to (((2))),
   wherein the input information includes second order reception information corresponding to the second manufacturing information, and
   the instruction is an instruction to output the first manufacturing information based on the first order reception information, the second manufacturing information, and the second order reception information.
(((4))) The information processing system according to (((2))) or (((3))), wherein the processor is configured to:
   extract a manufacturing item value that is a value of a manufacturing item included in manufacturing information, based on the first order reception information; and
   include search manufacturing information that is manufacturing information searched from among a plurality of pieces of manufacturing information based on the manufacturing item value, as the second manufacturing information in the input information.
(((5))) The information processing system according to (((4))), wherein the processor is configured to:
   display a plurality of pieces of the search manufacturing information on a display;
   receive a selection of a user for at least one of the plurality of pieces of displayed search manufacturing information; and
   include the search manufacturing information for which the selection is received as the second manufacturing information in the input information.
(((6))) The information processing system according to (((5))), wherein the processor is configured to:
   calculate, for each of the plurality of pieces of search manufacturing information, a similarity between the manufacturing item value included in the manufacturing information and a manufacturing item value included in the search manufacturing information; and
   determine an order in which the plurality of pieces of search manufacturing information are displayed, based on the calculated similarity.
(((7))) The information processing system according to (((6))), wherein the processor is configured to: display the similarity calculated for each of the plurality of pieces of search manufacturing information in association with each of the plurality of pieces of search manufacturing information.
(((8))) The information processing system according to any one of (((4))) to (((7))), wherein the processor is configured to: extract the manufacturing item value based on the first order reception information by inputting the first order reception information to the learning model and acquiring the manufacturing item value output from the learning model.
(((9))) The information processing system according to (((8))), wherein the processor is configured to further:
   acquire a manufacturing item value of a predetermined manufacturing item included in the manufacturing information from the first order reception information; and
   search for the manufacturing information from among the plurality of pieces of manufacturing information by using the acquired manufacturing item value output from the learning model and the acquired manufacturing item value of the predetermined manufacturing item.
(((10))) The information processing system according to any one of (((4))) to (((9))), wherein the processor is configured to further:
   acquire correspondence information indicating correspondence between an order reception item included in the first order reception information and a manufacturing item included in the first manufacturing information; and
   extract the manufacturing item based on the first order reception information and the correspondence information.
(((11))) The information processing system according to (((10))), wherein the processor is configured to further:
   input the first order reception information and the first manufacturing information to the learning model; and
   acquire the correspondence information output from the learning model.
(((12))) The information processing system according to (((11))), wherein the processor is configured to further:
   display a plurality of order reception items included in the first order reception information and a plurality of manufacturing items included in the first manufacturing information on a display based on the acquired correspondence information; and
   display a first order reception item included in the first order reception information and a first manufacturing item corresponding to the first order reception item in association with each other on the display.
(((13))) The information processing system according to (((12))), wherein the processor is configured to: in a case where the learning model determines that one order reception item included in the first order reception information corresponds to the plurality of manufacturing items included in the first manufacturing information,
   display the one order reception item and the plurality of manufacturing items in association with each other on the display.
(((14))) The information processing system according to any one of (((4))) to (((13))), wherein the processor is configured to further:
   include, in a case where the first order reception information includes identification information that is information for identifying specific manufacturing information, the specific manufacturing information in the input information by searching for the specific manufacturing information based on the identification information; and
   not extract the manufacturing item and not search for the manufacturing information based on the manufacturing item.
(((15))) The information processing system according to any one of (((1))) to (((14))),
   wherein the learning model is a large-scale language model.
(((16))) An information processing program causing a computer to execute:
   acquiring first order reception information including information on specifications of a product;
   inputting input information including the first order reception information and an instruction to output first manufacturing information including information on a process of manufacturing the product based on the first order reception information to a learning model; and
   acquiring the first manufacturing information output from the learning model.

According to (((1))), even in a case where the notations of the information included in the order reception information for the product and the manufacturing information for the product do not match, the manufacturing information corresponding to the order reception information can be obtained.

According to (((2))), the manufacturing information corresponding to the order reception information can be obtained in consideration of manufacturing information different from the manufacturing information corresponding to the order reception information.

According to (((3))), the manufacturing information corresponding to the order reception information can be obtained in consideration of manufacturing information different from the manufacturing information corresponding to the order reception information and the order reception information corresponding to the manufacturing information.

According to (((4))), the manufacturing information corresponding to the order reception information can be obtained in consideration of the manufacturing information searched for by using the manufacturing item extracted from the order reception information.

According to (((5))), the manufacturing information corresponding to the order reception information can be obtained in consideration of the manufacturing information selected by the user.

According to (((6))), the user can be caused to select the manufacturing information from among the plurality of pieces of manufacturing information displayed in the order based on the similarity with the extracted manufacturing item value.

According to (((7))), in a case where the user selects from the plurality of pieces of displayed manufacturing information, the user can refer to the similarity with the extracted manufacturing item value.

According to (((8))), the manufacturing information can be searched for by using the manufacturing item value acquired by using the learning model.

According to (((9))), the manufacturing information can be searched for by using the manufacturing item value acquired by using the learning model and the predetermined manufacturing item value.

According to (((10))), the manufacturing information corresponding to the order reception information can be obtained in consideration of the manufacturing information searched for by using the manufacturing item extracted from the order reception information based on the correspondence between the order reception item included in the order reception information and the manufacturing item included in the manufacturing information.

According to (((11))), the correspondence information indicating the correspondence between the order reception item included in the order reception information and the manufacturing item included in the manufacturing information can be obtained by using the learning model.

According to (((12))), the user can be caused to confirm the correspondence information indicating the correspondence between the order reception item included in the order reception information and the manufacturing item included in the manufacturing information, which is obtained by using the learning model.

According to (((13))), even in a case where one order reception item corresponds to the plurality of manufacturing items, the user can be caused to confirm the correspondence information indicating the correspondence between the order reception item included in the order reception information and the manufacturing item included in the manufacturing information, which is obtained by using the learning model.

According to (((14))), in a case where the identification information included in the order reception information is information for identifying the specific manufacturing information, the manufacturing information corresponding to the order reception information can be obtained in consideration of the specific manufacturing information without performing the search for the manufacturing information.

According to (((15))), even in a case where the notations of the information included in the order reception information for the product and the manufacturing information for the product do not match, the manufacturing information corresponding to the order reception information can be obtained by using the large-scale language model.

According to (((16))), even in a case where the notations of the information included in the order reception information for the product and the manufacturing information for the product do not match, the manufacturing information corresponding to the order reception information can be obtained.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

10: information processing system
11: server
12: printing apparatus
13: user terminal
14: management apparatus
50: acquisition section
51: extraction section
52: search section
53: recommendation section
54: generation section
55: output section
60: large-scale language model

## Claims

1. An information processing system comprising:
a processor configured to:
acquire first order reception information including information on specifications of a product;
input input information including the first order reception information and an instruction to output first manufacturing information including information on a process of manufacturing the product based on the first order reception information to a learning model; and
acquire the first manufacturing information output from the learning model.

2. The information processing system according to claim 1,
wherein the input information includes second manufacturing information different from the first manufacturing information, and
the instruction is an instruction to output the first manufacturing information based on the second manufacturing information.

3. The information processing system according to claim 2,
wherein the input information includes second order reception information corresponding to the second manufacturing information, and
the instruction is an instruction to output the first manufacturing information based on the first order reception information, the second manufacturing information, and the second order reception information.

4. The information processing system according to claim 2 or 3, wherein the processor is configured to:
extract a manufacturing item value that is a value of a manufacturing item included in manufacturing information, based on the first order reception information; and
include search manufacturing information that is manufacturing information searched from among a plurality of pieces of manufacturing information based on the manufacturing item value, as the second manufacturing information in the input information.

5. The information processing system according to claim 4, wherein the processor is configured to:
display a plurality of pieces of the search manufacturing information on a display;
receive a selection of a user for at least one of the plurality of pieces of displayed search manufacturing information; and
include the search manufacturing information for which the selection is received as the second manufacturing information in the input information.

6. The information processing system according to claim 5, wherein the processor is configured to:
calculate, for each of the plurality of pieces of search manufacturing information, a similarity between the manufacturing item value included in the manufacturing information and a manufacturing item value included in the search manufacturing information; and
determine an order in which the plurality of pieces of search manufacturing information are displayed, based on the calculated similarity.

7. The information processing system according to claim 6, wherein the processor is configured to: display the similarity calculated for each of the plurality of pieces of search manufacturing information in association with each of the plurality of pieces of search manufacturing information.

8. The information processing system according to any one of claims 4 to 7, wherein the processor is configured to: extract the manufacturing item value based on the first order reception information by inputting the first order reception information to the learning model and acquiring the manufacturing item value output from the learning model.

9. The information processing system according to claim 8, wherein the processor is configured to further:
acquire a manufacturing item value of a predetermined manufacturing item included in the manufacturing information from the first order reception information; and
search for the manufacturing information from among the plurality of pieces of manufacturing information by using the acquired manufacturing item value output from the learning model and the acquired manufacturing item value of the predetermined manufacturing item.

10. The information processing system according to any one of claims 4 to 9, wherein the processor is configured to further:
acquire correspondence information indicating correspondence between an order reception item included in the first order reception information and a manufacturing item included in the first manufacturing information; and
extract the manufacturing item based on the first order reception information and the correspondence information.

11. The information processing system according to claim 10, wherein the processor is configured to further:
input the first order reception information and the first manufacturing information to the learning model; and
acquire the correspondence information output from the learning model.

12. The information processing system according to claim 11, wherein the processor is configured to further:
display a plurality of order reception items included in the first order reception information and a plurality of manufacturing items included in the first manufacturing information on a display based on the acquired correspondence information; and
display a first order reception item included in the first order reception information and a first manufacturing item corresponding to the first order reception item in association with each other on the display.

13. The information processing system according to claim 12, wherein the processor is configured to: in a case where the learning model determines that one order reception item included in the first order reception information corresponds to the plurality of manufacturing items included in the first manufacturing information,
display the one order reception item and the plurality of manufacturing items in association with each other on the display.

14. The information processing system according to any one of claims 4 to 13, wherein the processor is configured to further:
include, in a case where the first order reception information includes identification information that is information for identifying specific manufacturing information, the specific manufacturing information in the input information by searching for the specific manufacturing information based on the identification information; and
not extract the manufacturing item and not search for the manufacturing information based on the manufacturing item.

15. An information processing program causing a computer to execute:
acquiring first order reception information including information on specifications of a product;
inputting input information including the first order reception information and an instruction to output first manufacturing information including information on a process of manufacturing the product based on the first order reception information to a learning model; and
acquiring the first manufacturing information output from the learning model.
